# EUROPEAN PATENT APPLICATION

(11) **EP 4 703 302 A1**
(43) Date of publication of application: **04.03.2026**
(21) Application number: 23935447.5
(22) Date of filing: 06.12.2023
(51) Int. Cl.: B65G 43/08, B65G 1/00, G05D 1/43

(54) **TRANSPORT SYSTEM**

(30) Priority: 26.04.2023 JP 2023072299
(71) Applicant: Daifuku Co., Ltd., Osaka-shi, Osaka 555-0012 (JP)
(72) Inventor: UEDA, Yuichi, Gamo-gun, Shiga 529-1692 (JP); SHINOHARA, Toshiko, Gamo-gun, Shiga 529-1692 (JP)
(74) Representative: Hoffmann Eitle
(86) International application number: PCT/JP2023/043604
(87) International publication number: WO 2024/224676

(57) **Abstract**

A conveyance system includes, for example, a first passage group that is constituted of a plurality of passages that are used for a plurality of wheeled platforms, that extend in a first direction, and that are formed in a line shape, a second passage group that is constituted of a plurality of passages that are used for the plurality of wheeled platforms, that extend in a second direction that intersects with the first direction, and that are formed in the line shape, a plurality of transfer portions in each of which the wheeled platform stops in order to carry out at least one of loading and unloading, and a control unit that controls a movement of the plurality of wheeled platforms on the first passage group and the second passage group, wherein at least one of the passages included in the first passage group intersects with at least one of the passages included in the second passage group, and the control unit controls the movement of each of the plurality of wheeled platforms such that, on a first passage included in the first passage group, the number of wheeled platforms moving in the first direction in a predetermined time period is greater than the number of wheeled platforms moving in a direction opposite to the first direction in the predetermined time period.

## Description

### Field

The present invention relates to a conveyance system.

### Background

Conventionally, as a passage used for a wheeled platform that conveys articles, there is a known passage that is formed in a grid shape and that is provided adjacent to a conveyor (for example, see Patent Literature 1).

### Citation List

### Patent Literature

Patent Literature 1: Japanese Laid-open Patent Publication No. 2021-134043

### Summary

### Technical Problem

With this type of passage, it would be beneficial, if it is possible to further enhance, for example, conveyance efficiency of the article.

Accordingly, it is an object in one aspect of an embodiment of the present invention to obtain a conveyance system capable of further enhancing conveyance efficiency of articles on, for example, a conveyance path having a plurality of passages that intersect with each other. Solution to Problem

To solve the problem and achieve the object, a conveyance system according to the present invention includes: a first passage group that is constituted of a plurality of passages that are used for a plurality of wheeled platforms, that extend in a first direction, and that are formed in a line shape; a second passage group that is constituted of a plurality of passages that are used for the plurality of wheeled platforms, that extend in a second direction that intersects with the first direction, and that are formed in the line shape; a plurality of transfer portions in each of which the wheeled platform stops in order to carry out at least one of loading and unloading; and a control unit that controls a movement of each of the plurality of wheeled platforms on the first passage group and the second passage group, wherein at least one of the passages included in the first passage group intersects with at least one of the passages included in the second passage group, and the control unit controls the movement of each of the plurality of wheeled platforms such that, on a first passage included in the first passage group, the number of wheeled platforms moving in the first direction in a predetermined time period is greater than the number of wheeled platforms moving in a direction opposite to the first direction in the predetermined time period.

### Brief Description of Drawings

FIG. 1 is an exemplary and schematic plan view of a conveyance path applied to a conveyance system according to a first embodiment.
FIG. 2 is an exemplary block diagram of a centralized control system that is included in the conveyance system according to the first embodiment.
FIG. 3 is an exemplary block diagram of a wheeled platform that is included in the conveyance system according to the first embodiment.
FIG. 4 is a schematic plan view illustrating one example of a movement path of the wheeled platform determined by the conveyance system according to the first embodiment with respect to the conveyance path illustrated in FIG. 1.
FIG. 5 is a schematic plan view illustrating another example of the movement path of the wheeled platform determined by the conveyance system according to the first embodiment with respect to the conveyance path illustrated in FIG. 1.
FIG. 6 is an exemplary and schematic plan view of a conveyance path applied to a conveyance system according to a second embodiment.
FIG. 7 is an exemplary and schematic plan view of a conveyance path applied to a conveyance system according to a third embodiment.
FIG. 8 is an exemplary and schematic plan view of a conveyance path applied to a conveyance system according to a fourth embodiment.
FIG. 9 is an exemplary and schematic plan view of a conveyance path applied to a conveyance system according to a fifth embodiment.
FIG. 10 is an exemplary block diagram of a centralized control system that is included in a conveyance system according to a sixth embodiment.
FIG. 11 is an exemplary and schematic plan view of a part of a conveyance path applied to a conveyance system according to a seventh embodiment.

### Description of Embodiments

Hereinafter, an exemplary embodiment according to the present invention will be disclosed. A configuration described below in the embodiment and an operation and a result (effect) obtained from the configuration are one example. The present invention is also able to be implemented by a configuration other than the configuration disclosed in the embodiment described below. Furthermore, according to the present invention, it is possible to obtain at least one of various kinds of effects (including derivative effects) to be obtained from the configuration described below.

Moreover, in the present application, an ordinal number may be able to be added in order to distinguish a direction, a passage group, a passage, and the like for the sake of convenience. Moreover, an ordinal number does not indicate a priority order or a sequential order, and also does not specify the number of directions, passage groups, passages, and the like.

Furthermore, in some of the drawings, each direction in a conveyance system is indicated by an arrow. An X direction, a Y direction, and a Z direction intersect with each other, and are also perpendicular to each other. The Z direction is substantially along the vertical direction, and an arrow Z points vertically upward. The X direction and the Y direction are substantially along the horizontal direction.

### [First Embodiment]

### [Configuration of conveyance path]

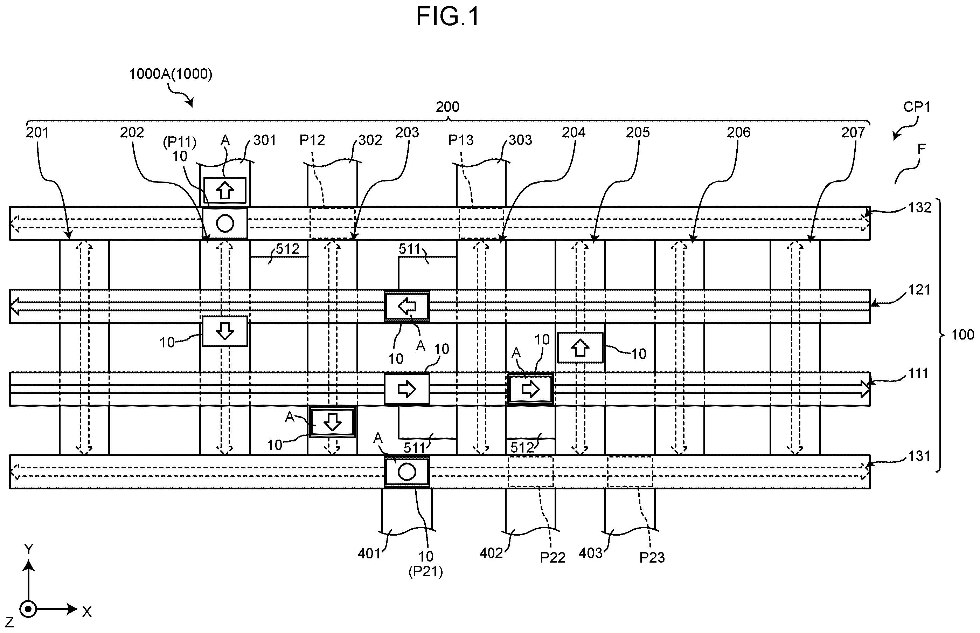

FIG. 1 is a plan view of a conveyance path CP1 that is applied to a conveyance system 1000A (1000) according to a first embodiment. As illustrated in FIG. 1, on a substantially horizontal floor F, the conveyance path CP1 that includes a plurality of passages 111, 121, 131, 132, and 201 to 207 that are arranged in a grid pattern is provided. The passages 111, 121, 131, and 132 that are substantially along the X direction and the passages 201 to 207 that are substantially along the Y direction intersect in a cross shape or in a T-shape.

A plurality of conveyors 301 to 303 face at an end portion of the conveyance path CP1 in the Y direction, and a plurality of conveyors 401 to 403 face at an end portion of the conveyance path CP1 in a direction opposite to the Y direction. Then, at a position that faces each of the conveyors 301 to 303 and 401 to 403 included in the conveyance path CP1, transfer positions P11 to P13 and P21 to P23 used for an article A are provided. Each of the transfer positions P11 to P13 and P21 to P23 is a position of a wheeled platform 10 at the time at which the article A is transferred between each of the conveyors 301 to 303 and 401 to 403 and the wheeled platform 10. A transfer device (not illustrated) carries out the transfer of the article A, that is, carries out loading or unloading of the article A with respect to the wheeled platform 10, while the wheeled platform 10 is located at each of the transfer positions P11 to P13 and P21 to P23.

The wheeled platform 10 is able to move by passing through the conveyance path CP1 between any two of the transfer positions from among the transfer positions P11 to P13 and P21 to P23. In other words, the wheeled platform 10 that passes through the conveyance path CP1 is able to carry the article A between any two of the conveyors from among the conveyors 301 to 303 and 401 to 403. Furthermore, the wheeled platform 10 that is empty and that does not load up the article A onto the wheeled platform 10 is able to move by passing through the conveyance path CP1 between any two of the transfer positions from among the transfer positions P11 to P13 and P21 to P23. Furthermore, in a case where a pool (not illustrated) that is used for the empty wheeled platforms 10 and in which each of the wheeled platforms 10 are able to come in and go out is provided outside the conveyance path CP1, each of the wheeled platforms 10 is able to move between the pool and the transfer positions P11 to P13 and P21 to P23. Moreover, in FIG. 1, an open arrow indicates a direction of a movement of each of the wheeled platforms 10 or the articles A, and a circle indicates a state in which each of the wheeled platforms 10 is temporarily stopped.

On the conveyance path CP1, each of the plurality of the passages 111, 121, 131, and 132 extending in the X direction is one example of the passage that is included in a first passage group 100, and each of the plurality of passages 201 to 207 extending in the Y direction is one example of the passage that is included in a second passage group 200. The X direction is one example of a first direction, and the Y direction is one example of a second direction. Furthermore, each of the transfer positions P11 to P13 and P21 to P23 is one example of a transfer portion.

In the present embodiment, each of the wheeled platforms 10 is, as one example, an automated guided vehicle with a path guidance type. In this case, the passages 111, 121, 131, 132, and 201 to 207 are determined by a plurality of guide objects (not illustrated) that are installed on the floor F. Each of the guide objects is, for example, a guide object with a magnetic type, such as a magnetic rod or a magnetic tape, a guide object with an optical type, such as a light reflective tape, a guide object with an image recognition type, such as a one-dimensional code or a two-dimensional code, a guide object with a laser guide type, such as a reflector plate, or the like. Each of the wheeled platforms 10 includes a sensor that has a function performed in accordance with the type of the guide object.

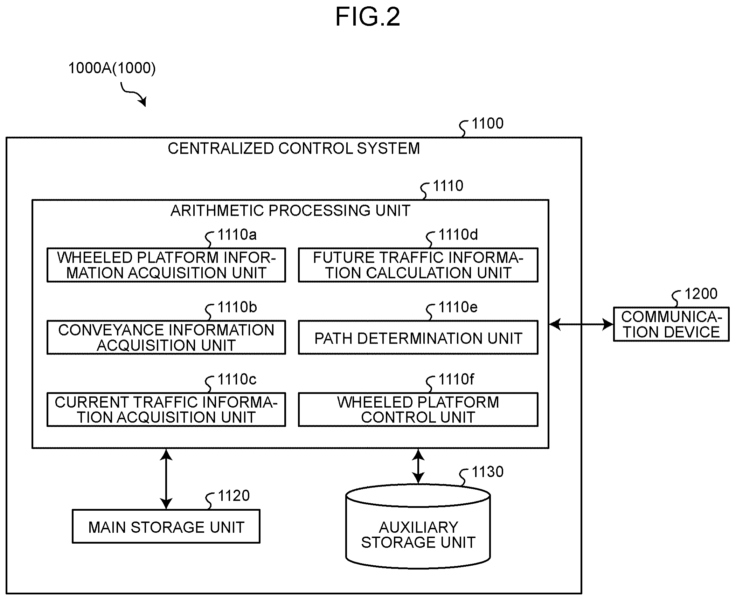

The wheeled platforms 10 move, in the present embodiment, as one example, on the passages 111, 121, 131, 132, and 201 to 207 indicated by an instruction signal, in accordance with a wireless instruction signal received from a centralized control system 1100 (see FIG. 2) by passing through the path indicated by the instruction signal while being guided by the plurality of guide objects.

The passages 111 and 121 extend between the passage 131 and the passage 132. The passage 111 is set as the passage in which the wheeled platform 10 mainly moves in the X direction, and the passage 121 is set as the passage in which the wheeled platform 10 mainly moves in the direction opposite to the X direction. The direction of a movement of the wheeled platform 10 is defined by control performed by the centralized control system 1100 with respect to the wheeled platform 10. As a result, in this case, the centralized control system 1100 performs control such that, on the passage 111, the wheeled platform 10 mainly moves in the X direction, and, on the passage 121, the wheeled platform 10 mainly moves in the direction opposite to the X direction. The passage 111 is one example of a first passage, and the passage 121 is one example of a second passage. Furthermore, the centralized control system 1100 is one example of a control unit.

The passage 131 extends between the passage 111 and the conveyors 401 to 403, and the passage 132 extends between the passage 121 and the conveyors 301 to 303. The passages 131 and 132 are set as the passages in which each of the wheeled platforms 10 is able to move in the X direction and in the direction opposite to the X direction. In other words, the centralized control system 1100 performs control such that, on the passages 131 and 132, each of the wheeled platforms 10 moves in the X direction or in the direction opposite to the X direction. Each of the passages 131 and 132 is one example of a third passage.

Furthermore, the passages 201 to 207 are set as the passages in which each of the wheeled platforms 10 is able to move in the Y direction and in the direction opposite to the Y direction. In other words, the centralized control system 1100 performs control such that, on the passages 201 to 207, each of the wheeled platforms 10 moves in the Y direction or the direction opposite to the Y direction.

As described above, in a case where the main directions of the movements of the respective wheeled platforms 10 are set to the passages 111 and 121 and the main directions of the movements of the respective wheeled platforms 10 are set to be reverse directions each other, it is possible to prevent a collision of the plurality of the wheeled platforms 10 while moving closer together on each of the passages 111 and 121, and also, it is possible to suppress an increase in a time period needed for conveyance of each of the articles A due to a decrease in a movement speed of the respective wheeled platforms 10 in order to avoid the collision.

The setting of the main directions of the movements of the respective wheeled platforms 10 on the passages 111 and 121 in this way is able to be identified on the basis of, for example, a movement status of each of the wheeled platforms 10 passing through the passages 111 and 121 in a predetermined time period. Specifically, in a case where all of the wheeled platforms 10 move along the passage 111 in the X direction in the predetermined time period, in a case where most of the wheeled platforms 10 (for example, three quarters or more) move along the passage 111 in the X direction, in a case where the number of the wheeled platforms 10 moving along the passage 111 in the X direction in the predetermined time period is greater than the number of the wheeled platforms 10 moving along the passage 111 in the direction opposite to the X direction in the predetermined time period, or the like, the centralized control system 1100 is able to identify that control is performed such that the wheeled platforms 10 mainly move along the passage 111 in the X direction. Similarly, in a case where all of the wheeled platforms 10 move along the passage 121 in the direction opposite to the X direction in the predetermined time period, in a case where most of the wheeled platform 10 (for example, three quarters or more) move along the passage 121 in the direction opposite to the X direction, in a case where the number of the wheeled platforms 10 moving along the passage 121 in the direction opposite to the X direction in the predetermined time period is greater than the number of the wheeled platforms 10 moving along the passage 121 in the X direction in the predetermined time period, or the like, the centralized control system 1100 is able to identify that control is performed such that the wheeled platforms 10 mainly move along the passage 121 in the direction opposite to the X direction.

Here, the predetermined time period can be set to a time period equal to or greater than an average value of the period of time needed for at least, for example, each of the wheeled platforms 10 to move between any two of the transfer positions from among the transfer positions P11 to P13 and P21 to P23 included in the conveyance path CP1. Furthermore, the predetermined time period may be set to a time period from a time point at which, for example, a single piece of the wheeled platform 10 enters the passage 111 or the passage 121 when none of the wheeled platforms 10 is present at all on both of the passage 111 and the passage 121 to a time point at which none of the wheeled platforms 10 is present at all on both of the passage 111 and the passage 121 next time. Moreover, the centralized control system 1100 is able to replace the main direction of the movement of each of the wheeled platforms 10 to be set to the passage 111 with the main direction of the movement of each of the wheeled platforms 10 to be set to the passage 121. In this case, the predetermined time period is set so as to avoid the replaced timing.

Furthermore, in a case where each of the wheeled platforms 10 is controlled so as to move in the main direction on the passages 111 and 121, and in a case where each of the wheeled platforms 10 is controlled so as to be able to move in the X direction and in the direction opposite to the X direction on the passages 131 and 132:
(1) a ratio of the number of the wheeled platforms 10 moving along the passage 131 in the X direction in the predetermined time period to the number of all of the wheeled platforms 10 moving along the passage 131 in the predetermined time period is lower than a ratio of the number of the wheeled platforms 10 moving along the passage 111 in the X direction in the predetermined time period to the number of all of the wheeled platforms 10 moving along the passage 111 in the predetermined time period, and a ratio of the number of the wheeled platforms 10 moving along the passage 132 in the direction opposite to the X direction in the predetermined time period to the number of all of the wheeled platforms 10 moving along the passage 132 in the predetermined time period is lower than a ratio of the number of the wheeled platforms 10 moving along the passage 121 in the direction opposite to the X direction to the number of all of the wheeled platforms 10 moving along the passage 121 in the predetermined time period. Furthermore,
(2) an absolute value of an average speed of all of the wheeled platforms 10 moving along the passages 111 and 121 in the predetermined time period is larger than an absolute value of an average speed of all of the wheeled platforms 10 moving along the passages 131 and 132 in the predetermined time period.

The above described (1) and (2) items may be evidence that the main direction of the movement of the wheeled platform 10 is set to each of the passages 111 and 121, and also, that the passages 131 and 132 are used as the passages in which each of the wheeled platforms 10 is able to move in the X direction and in the direction opposite to the X direction.

### [Configuration of centralized control system]

FIG. 2 is a block diagram of the centralized control system 1100. As illustrated in FIG. 2, the centralized control system 1100 is configured as a computer including, for example, an arithmetic processing unit 1110, a main storage unit 1120, an auxiliary storage unit 1130, and the like. The arithmetic processing unit 1110 is, for example, a central processing unit (CPU), the main storage unit 1120 is, for example, a random access memory (RAM), a read only memory (ROM), or the like, and the auxiliary storage unit 1130 is a solid state drive (SSD), a hard disk drive (HDD), or the like. The arithmetic processing unit 1110 includes a wheeled platform information acquisition unit 1110a, a conveyance information acquisition unit 1110b, a current traffic information acquisition unit 1110c, a future traffic information calculation unit 1110d, a path determination unit 1110e, a wheeled platform control unit 1110f, and the like. As a result of the arithmetic processing unit 1110 operating in accordance with an installed program, the arithmetic processing unit 1110 functions as the wheeled platform information acquisition unit 1110a, the conveyance information acquisition unit 1110b, the current traffic information acquisition unit 1110c, the future traffic information calculation unit 1110d, the path determination unit 1110e, the wheeled platform control unit 1110f, or the like, and executes a process in accordance with a predetermined algorithm that has been defined in the program.

The wheeled platform information acquisition unit 1110a wirelessly acquires wheeled platform information that indicates a position, a speed, or the like of each of the wheeled platforms 10 from, for example, the sensor that has been provided on the floor F or each of the wheeled platforms 10 via a communication device 1200.

The conveyance information acquisition unit 1110b acquires conveyance information that indicates a conveyance instruction or the like of the article A by way of the conveyors 301 to 303 and 401 to 403 from, for example, the higher-level device, via the communication device 1200.

The current traffic information acquisition unit 1110c acquires traffic information that indicates an arrangement of each of the wheeled platforms 10 in the conveyance path CP1, a movement speed of each of the wheeled platforms 10, and the like at the present time from, for example, the wheeled platform information that has been acquired by the wheeled platform information acquisition unit 1110a and that is related to the plurality of the wheeled platforms 10. The current traffic information acquisition unit 1110c calculates the traffic information at a predetermined time interval, and updates the calculated traffic information.

The future traffic information calculation unit 1110d estimates, from the traffic information that has been acquired by the current traffic information acquisition unit 1110c and the wheeled platform information that has been acquired by the wheeled platform information acquisition unit 1110a, the arrangement and the movement speed of each of the wheeled platforms 10 in the conveyance path CP1 at a predetermined timing in the future, and calculates the traffic information at the predetermined timing in the future. Furthermore, the future traffic information calculation unit 1110d determines whether or not the traffic information indicating the traffic at the predetermined timing in the future satisfies an allowable condition. The allowable condition is a condition that, for example, a distance between the two wheeled platforms 10 that are close to each other is set to be equal to or greater than a predetermined distance. In addition, in a case where the allowable condition is not satisfied, the future traffic information calculation unit 1110d is able to revise the arrangement, the movement speed, or the like of the two wheeled platforms 10.

The path determination unit 1110e determines an allocation, a movement path, or the like of each of the wheeled platforms 10 on the basis of, for example, the future traffic information that has been calculated by the future traffic information calculation unit 1110d and the conveyance information that has been acquired by the conveyance information acquisition unit 1110b. Moreover, in the following, a conveyor that loads up each of the articles A onto the conveyance path CP1 from among the conveyors 301 to 303 and 401 to 403 is simply referred to as a loading conveyor, and a conveyor that discharges each of the articles A from the conveyance path CP1 from among the conveyors 301 to 303 and 401 to 403 is simply referred to as an unloading conveyor.

Specifically, the path determination unit 1110e is able to determine, for example,
(1) an allocation of the wheeled platform 10 that conveys the subject article A from among the empty wheeled platforms 10,
(2) a movement path to the transfer position of the allocated wheeled platform 10 associated with the loading conveyor,
(3) a movement path from the transfer position associated with the loading conveyor to the transfer position associated with the unloading conveyor,
(4) a subsequent movement path of the wheeled platform 10 that has been empty after the article A has been transferred to the unloading conveyor, and the like.

After that, the future traffic information calculation unit 1110d calculates the traffic information that is indicated at the predetermined timing in the future and that includes the wheeled platform 10 whose movement path has been determined by the path determination unit 1110e, and determines whether or not the calculated traffic information satisfies the allowable condition, and then, may revise the arrangement or the movement speed of the wheeled platform 10. In a case where the calculated traffic information is not able to satisfy the allowable condition by the revision, the path determination unit 1110e may change the movement path of the wheeled platform 10.

The wheeled platform control unit 1110f calculates, for example, the traffic information that is related to the traffic at the predetermined timing in the future and that has been determined by the future traffic information calculation unit 1110d, that is, the control information that is used to control the arrangement and the movement speed of each of the wheeled platforms 10 from the arrangement and the movement speed of each of the wheeled platforms 10, and wirelessly transmits the control information to each of the wheeled platforms 10 via the communication device 1200. The control information may also be referred to as instruction information.

### [Configuration of wheeled platform]

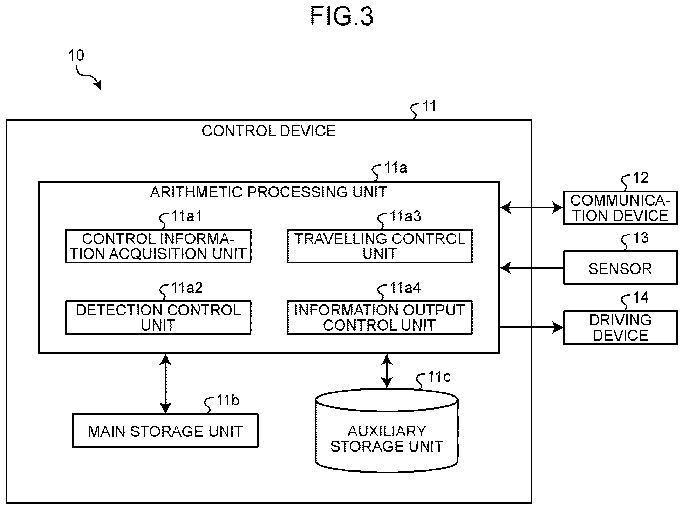

FIG. 3 is a block diagram of the wheeled platform 10. As illustrated in FIG. 3, a control device 11 provided in the wheeled platform 10 is configured as a computer that includes, for example, an arithmetic processing unit 11a, a main storage unit 11b, an auxiliary storage unit 11c, and the like. The arithmetic processing unit 11a is, for example, a central processing unit (CPU), the main storage unit 11b is, for example, a RAM, a ROM, or the like, and the auxiliary storage unit 11c is an SSD, a HDD, or the like. The arithmetic processing unit 11a includes a control information acquisition unit 11a1, a detection control unit 11a2, a travelling control unit 11a3, an information output control unit 11a4, and the like. As a result of the arithmetic processing unit 11a operating in accordance with an installed program, the arithmetic processing unit 11a functions as the control information acquisition unit 11a1, the detection control unit 11a2, the travelling control unit 11a3, the information output control unit 11a4, or the like.

The control information acquisition unit 11a1 wirelessly acquires the control information that has been output from the centralized control system 1100 via, for example, a communication device 12.

The detection control unit 11a2 acquires detection information sent from, for example, a sensor 13. The sensor 13 is a position sensor that detects a position of the wheeled platform 10 on, for example, the conveyance path CP1, or a speed sensor that detects a speed of the wheeled platform 10. The speed sensor detects a rotational speed of a motor serving as, for example, a driving device 14.

The travelling control unit 11a3 controls the driving device 14 provided for the wheeled platform 10 on the basis of, for example, the control information that has been acquired by the control information acquisition unit 11a1 and the detection information that has been acquired by the detection control unit 11a2 such that the wheeled platform 10 enters the state that has been indicated by the control information. The driving device 14 includes, for example, an electric motor, an inverter that drives the electric motor, a brake, a brake actuator, and the like.

The information output control unit 11a4 controls the communication device 12 such that the communication device 12 wirelessly transmits, for example, the detection information that has been acquired by the detection control unit 11a2 or the information that indicates the state of the driving device 14 and that has been acquired from the travelling control unit 11a3 to the centralized control system 1100.

### [Setting example (1) of movement path]

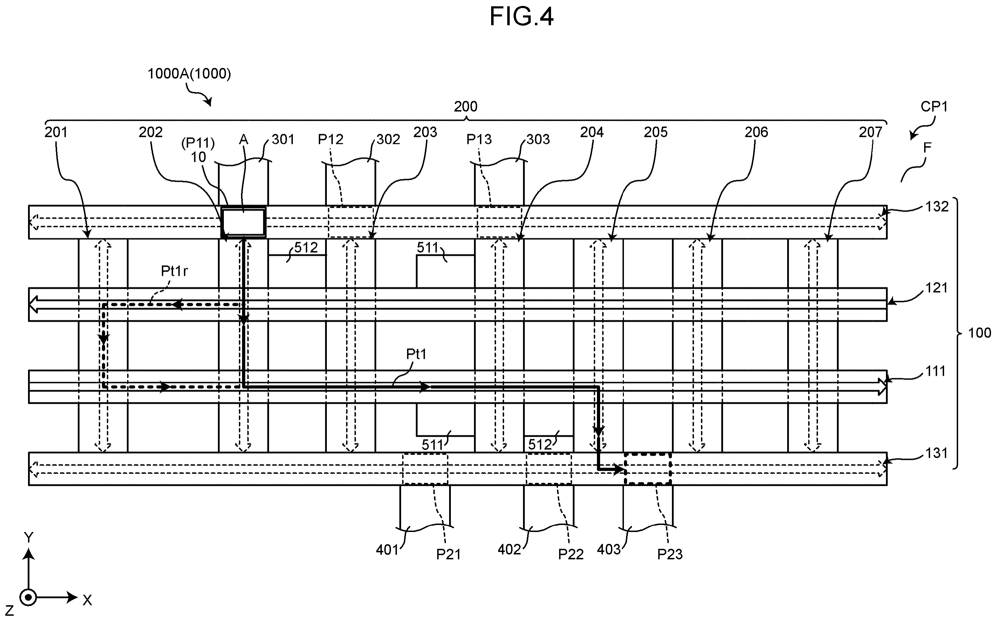

FIG. 4 indicates a setting example of a movement path Pt1 of the wheeled platform 10 on which the article A is loaded from the transfer position P11 to the transfer position P23. In this case, the wheeled platform 10 moves from the transfer position P11 corresponding to the conveyor 301 to the transfer position P23 corresponding to the conveyor 403 on the conveyance path CP1 in order to convey the article A from the conveyor 301 to the conveyor 403. The transfer position P11 is a departure position provided on the movement path Pt1, and the transfer position P23 is an arrival position provided on the movement path Pt1. Here, as illustrated in FIG. 4, the transfer position P23 is shifted in the X direction and is also shifted in the direction opposite to the Y direction with respect to the transfer position P11. In this case, first, the path determination unit 1110e determines the movement path to be the movement path Pt1 illustrated in FIG. 4 such that the movement path includes only the section in which a movement is performed in the X direction and the section in which a movement is performed in the direction opposite to the Y direction and also such that the section in which the movement performed in the X direction is secured as long as possible in the passage 111.

Furthermore, in a case where the path determination unit 1110e is not able to satisfy the allowable condition in the movement path Pt1 that has been determined in the above described procedure, the path determination unit 1110e may change the movement path Pt1 so as to include a detour path Pt1r that is indicated by a thick broken line illustrated in FIG. 4. In this case, it is preferable that the passage 111 is included in the detour path Pt1r.

### [Setting example (2) of movement path]

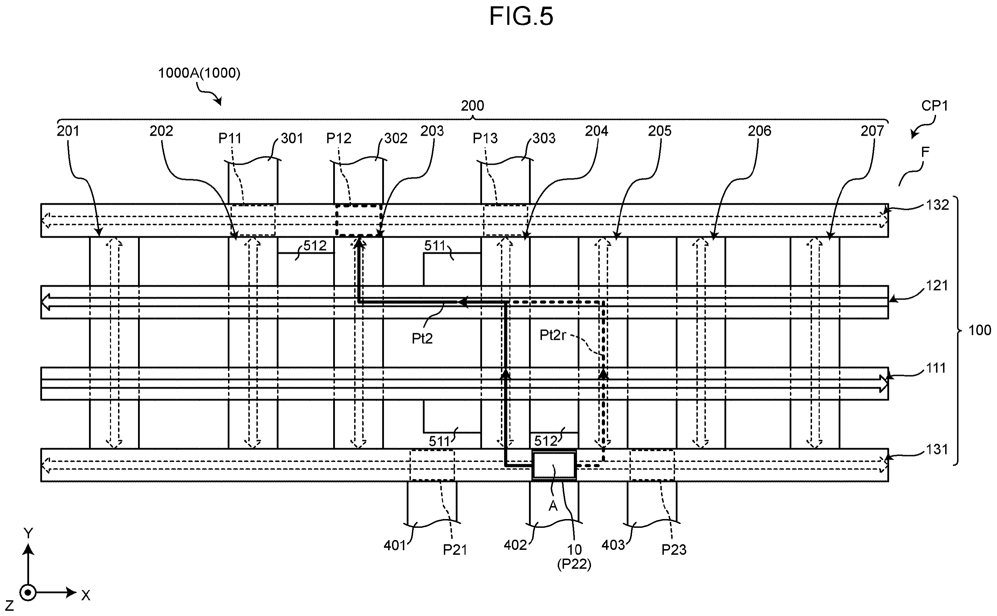

FIG. 5 indicates a setting example of a movement path Pt2 of the wheeled platform 10 on which the article A is loaded from the transfer position P22 to the transfer position P12. In this case, the wheeled platform 10 moves from the transfer position P22 corresponding to the conveyor 402 to the transfer position P12 corresponding to the conveyor 302 on the conveyance path CP1 in order to convey the article A from the conveyor 402 to the conveyor 302. The transfer position P22 is a departure position on the movement path Pt2, and the transfer position P12 is an arrival position on the movement path Pt2. Here, as illustrated in FIG. 5, the transfer position P12 is shifted in the direction opposite to the X direction and is also shifted in the Y direction with respect to the transfer position P22. In this case, first, the path determination unit 1110e determines the movement path to be the movement path Pt2 illustrated in FIG. 5 such that the movement path includes only the section in which the movement is performed in the direction opposite to the X direction and the section in which the movement is performed in the Y direction and also such that the section in which the movement is performed in the direction opposite to the X direction is secured as long as possible in the passage 121.

Furthermore, in a case where the path determination unit 1110e is not able to satisfy the allowable condition in the movement path Pt2 that has been determined in the above described procedure, the path determination unit 1110e may change the movement path Pt2 so as to include a detour path Pt2r that is indicated by a thick broken line illustrated in FIG. 5. In this case, it is preferable that the passage 121 is included in the path Pt2r.

### [Waiting of wheeled platform]

The wheeled platform 10 is able to wait at a predetermined waiting position.

In the present embodiment, as illustrated in FIG. 1, waiting positions 511 and 512 are provided. The waiting position 511 faces the passage 111 or the passage 121 that extends in the X direction, and also faces the single passage 204 that extends in the Y direction. Furthermore, the waiting position 512 faces the passage 111 or the passage 121 that extends in the X direction, and also faces the two passages (the passage 202 and the passage 203, or the passage 204 and the passage 205) that extend in the Y direction. In this case, the wheeled platform 10 is able to come in the waiting positions 511 and 512, and wait to enter the passage that faces the waiting positions 511 and 512. As a result of this, for example, it is possible to obtain an effect of suppressing interference with the other wheeled platform 10 in the passage. Furthermore, the waiting positions 511 and 512 are provided so as to be adjacent to one of the passages included in the conveyance path CP1. As a result of this, for example, an effect is provided in that the wheeled platform 10 is able to more smoothly and quickly enter from the passage that is adjacent to the waiting positions 511 and 512. Each of the waiting positions 511 and 512 is one example of a waiting portion.

The future traffic information calculation unit 1110d may also determine an arrangement or a movement speed of the wheeled platform 10 including a wait of the wheeled platform 10 at the waiting positions 511 and 512, or the path determination unit 1110e may also determine a movement path of the wheeled platform 10 including the waiting positions 511 and 512.

Furthermore, the wheeled platform 10 may wait on the passages 131 and 132, and 201 to 207 that are other than the passages 111 and 121 in each of which the main direction of the movement of the wheeled platform 10 has been set. In other words, the waiting portion may be included in the passages 131 and 132, and 201 to 207. In this case, the wheeled platform 10 may wait while temporarily stopping or moving at a low speed enough to stop immediately. Furthermore, a wait on the passages 131 and 132, and 201 to 207 may be a wait before the wheeled platform 10 enters the passages 111 and 121, or may be a wait before the wheeled platform 10 moves to the transfer positions P11 to P13 and P21 to P23. As a result of this, for example, an effect is provided in that it is possible to secure a larger number of waiting positions and also secure the waiting positions at various kinds of positions by using the passages 131 and 132, and 201 to 207. Each of the passages 131 and 132, and 201 to 207 is one example of a waiting portion.

As described above, in the present embodiment, the conveyance path CP1 includes the passage 111 (the first passage) or the passage 121 (the second passage) in each of which the main direction of the movement has been set. As a result of this, for example, an effect is provided in that it is possible to allow each of the wheeled platforms 10 to move on the passages 111 and 121 at a higher speed, so that it is possible for each of the wheeled platforms 10 to move the conveyance path CP1 more quickly as compared to a case in which the conveyance path CP1 does not include the passages 111 and 121, and, in addition, it is possible to further enhance the conveyance efficiency of the article A in the conveyance path CP1.

In this case, each of the passages 111 and 121 in which the main direction of the movement has been set may be the passage in which, for example, the number of the wheeled platforms 10 moving in the main direction of the movement in the predetermined time period is greater than the number of the wheeled platforms 10 moving in the direction opposite to the main direction of the movement in the predetermined time period, or may be the passage in which all of the passing wheeled platforms 10 move in the main direction of the movement.

Furthermore, in the present embodiment, conveyance path CP1 is provided with the passages 131 and 132, and 201 to 207 that are not the passages 111 and 121 in each of which the main direction of the movement has been set. In a case where the main direction of the movement has been set in all of the passages, a constraint with respect to the movement path of the wheeled platform 10 increases, so that the movement speed of the wheeled platform 10 may accordingly decrease instead. In view of this, in the present embodiment, the conveyance path CP1 is provided with the passages 131 and 132 (the third passage) and the passages 201 to 207 in each of which the main direction of the movement is not set, apart from the passages 111 and 121 (the first passage and the second passage), so that, for example, as a result of a constraint with respect to the movement path of the wheeled platform 10 decreasing and more flexible setting of the movement path being possible, an effect is provided in that it is possible to suppress a decrease in the movement speed of each of the wheeled platforms 10, and, in addition, it is possible to further enhance the conveyance efficiency of the article A in the conveyance path CP1.

In this case, the passage 131 (the third passage) in which the main direction of the movement is not set may be a passage in which, for example, a ratio of the number of the wheeled platforms 10 moving in the X direction in the predetermined time period to the number of all of the wheeled platforms 10 passing through the passage 131 in the predetermined time period may be lower than a ratio of the number of the wheeled platforms 10 moving in the X direction in the predetermined time period to the number of all of the wheeled platforms 10 passing through the passage 111 in the predetermined time period, or may be a passage in which an absolute value of the average speed of all of the wheeled platforms 10 passing through the passage 131 in the predetermined time period may be smaller than an absolute value of the average speed of all of the wheeled platforms 10 passing through the passage 111 in the predetermined time period. On the other hand, the passage 132 (the third passage) in which the main direction of the movement is not set may be a passage in which a ratio of the number of the wheeled platforms 10 moving in the direction opposite to the X direction in the predetermined time period to the number of all of the wheeled platforms 10 passing through the passage 132 in the predetermined time period is lower than a ratio of the number of the wheeled platforms 10 moving in the direction opposite to the X direction in the predetermined time period to the number of all of the wheeled platforms 10 passing through the passage 121 in the predetermined time period, or may be a passage in which an absolute value of the average speed of all of the wheeled platforms 10 passing through the passage 132 in the predetermined time period is smaller than an absolute value of the average speed of all of the wheeled platforms 10 passing through the passage 121 in the predetermined time period.

Furthermore, in the present embodiment, as illustrated in FIG. 1, the transfer positions P11 to P13 and P21 to P23 are included in the passage 131 or the passage 132. As a result of this, for example, an effect is provided in that it is possible to further efficiently arrange the transfer positions P11 to P13 and P21 to P23 by using the passages 131 and 132 without particularly securing a space on the floor F.

Furthermore, in the present embodiment, as illustrated in FIG. 1, each of the transfer positions P11 to P13 is arrange in parallel with one of the passages 202 to 204 in the Y direction. In other words, the passages 201 to 207 includes the passages 202 to 204 that is disposed alongside with one of the transfer positions P11 to P13 in the Y direction. As a result of this, for example, an effect is provided in that the wheeled platform 10 is able to smoothly and quickly move from the transfer positions P11 to P13 to one of the passages 202 to 204.

Furthermore, in the present embodiment, as illustrated in FIG. 1, each of the transfer positions P21 to P23 is shifted in the X direction or in the direction opposite to the X direction with respect to the passages 201 to 207. In other words, both of the passages 201 to 207 are shifted in the X direction or in the direction opposite to the X direction with respect to the transfer positions P21 to P23. As a result of this, for example, an effect is provided in that it is possible to suppress the wheeled platform 10 located at each of the transfer positions P21 to P23 from being an obstruction of a path of the other wheeled platform 10 between the passages 201 to 207 and the passage 131.

### [Second Embodiment]

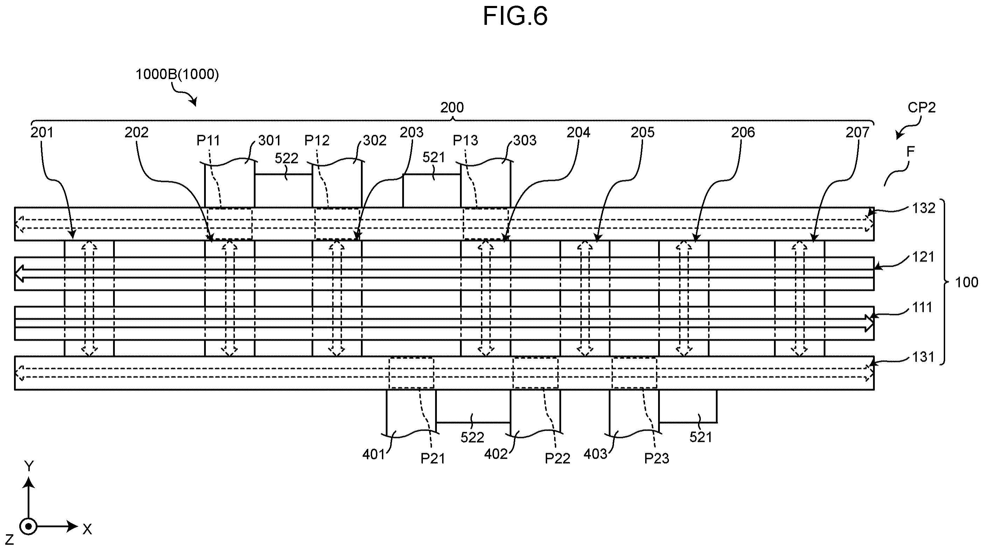

FIG. 6 is a plan view of a conveyance path CP2 that is applied to a conveyance system 1000B (1000) according to a second embodiment. As illustrated in FIG. 6, in also the present embodiment, similarly to the first embodiment described above, the conveyance path CP2 that includes the plurality of the passages 111, 121, 131, 132, and 201 to 207 that are arranged in a grid pattern is provided on the substantially horizontal floor F.

As is clear when FIG. 6 is compared with FIG. 1, in the present embodiment, an interval in the Y direction between the plurality of the passages 111, 121, 131, and 132 that extend in the X direction is narrow. As a result of this, for example, an effect is provided in that it is also possible to apply the conveyance path CP2 to the floor F with a narrow space in the Y direction.

However, in the present embodiment, it is difficult to provide the waiting positions 511 and 512 between the passages 111, 121, 131, and 132, and, also, it is difficult to use the passages 201 to 207 extending in the Y direction as the waiting positions.

Accordingly, in the conveyance path CP2, waiting positions 521 and 522 that face the passage 131 or the passage 132 are provided. As a result of this, for example, an effect is provided in that it is possible to secure more waiting positions.

Furthermore, each of the waiting positions 521 and 522 is adjacent to at least one of the conveyors. The waiting position 521 is disposed adjacent to the single conveyor (the conveyor 303 or the conveyor 403), and the waiting position 522 is disposed adjacent to the two conveyors (the conveyor 301 and 302, or the conveyors 401 and 402) that are adjacent in the X direction. In addition, in this case, for example, by providing the transfer device corresponding to each of the waiting positions 521 and 522, it is possible to transfer the article A between the wheeled platforms 10 that are located at the waiting positions 521 and 522 and the conveyors 301 to 303 and 401 to 403. As a result of this, for example, an effect is provided in that it is possible to further enhance the conveyance efficiency of the article A. In this case, each of the waiting positions 521 and 522 is one example of the transfer portion.

### [Third Embodiment]

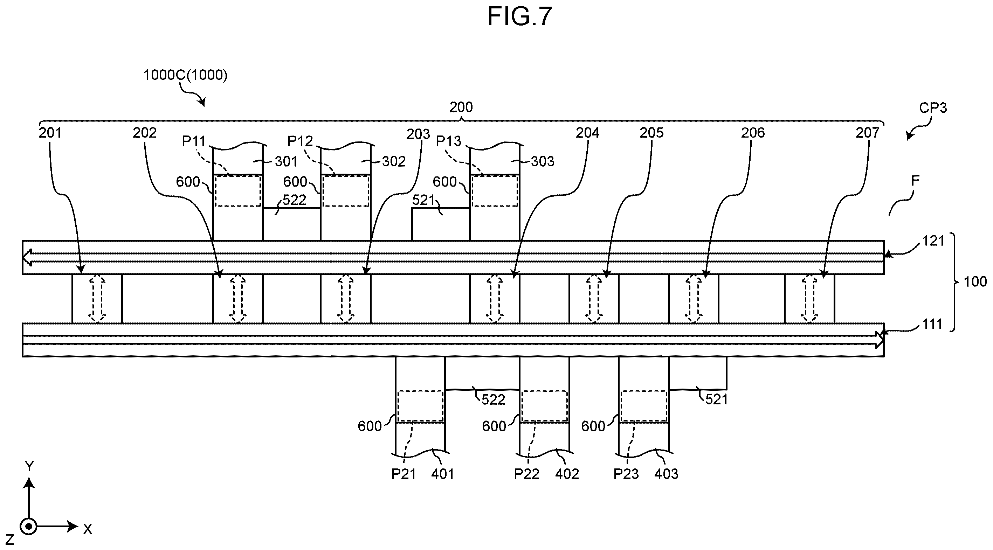

FIG. 7 is a plan view of a conveyance path CP3 that is applied to a conveyance system 1000C (1000) according to a third embodiment. In the present embodiment, the conveyance path CP3 that includes the plurality of the passages 111, 121, and 201 to 207 arranged in a ladder shape and that do not include the passages 131 and 132 (see FIG. 1) is provided on the substantially horizontal floor F. In other words, on the conveyance path CP3, the first passage group 100 includes the passages 111 and 121 in each of which the main direction of a movement of the wheeled platform 10 has been set, but does not include the passages 131 and 132 in each of which the wheeled platform 10 is able to move in both directions of the X direction and the direction opposite to the X direction. In this case, for example, an effect is provided in that it is possible to reduce the processing load applied to the centralized control system 1100 by an amount corresponding to the number of passages to be managed.

As illustrated in FIG. 7, in the present embodiment, passages 600 each of which protrudes from the passages 111 and 121 to the conveyors 301 to 303 and 401 to 403 in the Y direction or in the direction opposite to the Y direction are provided, and the transfer positions P11 to P13 and P21 to P23 are provided to the respective passages 600. In other words, the transfer positions P11 to P13 and P21 to P23 are provided so as to be shifted in the Y direction or the direction opposite to the Y direction with respect to the passages 111 and 121. As a result of this, for example, an effect is provided in that it is possible to suppress the wheeled platforms 10 located at the transfer positions P11 to P13 and P21 to P23 from being an obstruction of a path of the other wheeled platforms 10 that are located on the passages 111 and 121.

In addition, in the present embodiment, as illustrated in FIG. 7, the waiting positions 521 and 522 are provided. The waiting position 521 faces the passage 111 or the passage 121, and also faces one of the passages 600. Furthermore, the waiting position 522 faces the passage 111 or the passage 121, and also faces the two passages 600. In this case, each of the wheeled platforms 10 is able to go into the waiting positions 521 and 522 and wait to enter the passages 111, 121, and 600. As a result of this, for example, an effect is provided in that it is possible to suppress an interference with the other wheeled platforms 10 in the passages 111, 121, and 600. Furthermore, the waiting positions 521 and 522 are provided so as to be adjacent to the passages 111, 121, and 600. As a result of this, for example, an effect is provided in that each of the wheeled platforms 10 is able to more smoothly and quickly enter from the passages 111, 121, and 600 that are adjacent to the waiting positions 521 and 522. Furthermore, the waiting positions 521 and 522 are adjacent to the passages 600 in which the transfer positions P11 to P13 and P21 to P23 are provided. As a result of this, an effect is provided in that, in a case where the wheeled platforms 10 wait to move to the transfer positions P11 to P13 and P21 to P23 at the waiting positions 521 and 522 while the other wheeled platforms 10 are located at the transfer positions P11 to P13 and P21 to P23, the wheeled platforms 10 are able to move to the transfer positions P11 to P13 and P21 to P23 immediately after the other wheeled platforms 10 have been moved from the transfer positions P11 to P13 and P21 to P23.

Moreover, the passages 600 in which the transfer positions P11 to P13 and P21 to P23 are provided may be provided on the conveyance paths CP1 and CP2 according to the first and second embodiments described above (see FIGS. 1 and 6). In this case, the passage 600 is provided between the passage 131 and each of the conveyors 401 to 403, and is provided between the passage 132 and each of the conveyors 301 to 303. With this configuration, the passage 131 is provided between the passage 111 and the transfer positions P21 to P23, whereas the passage 132 is provided between the passage 121 and the transfer positions P11 to P13. In this case, for example, an effect is provided in that the wheeled platforms 10 located at the transfer positions P11 to P13 and P21 to P23 from being an obstruction of a path of the other wheeled platforms 10 that are located in the passages 111 and 121.

### [Fourth Embodiment]

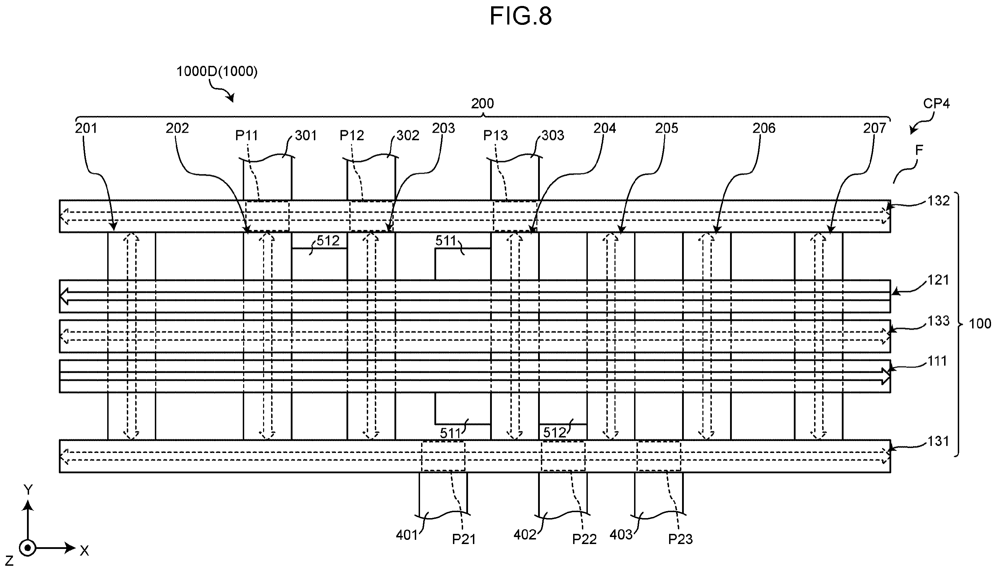

FIG. 8 is a plan view of a conveyance path CP4 that is applied to a conveyance system 1000D (1000) according to a fourth embodiment. As is clear when FIG. 8 is compared with FIG. 1, the conveyance path CP4 according to the present embodiment is different from the conveyance path CP1 according to the first embodiment in that a passage 133 extending in the X direction is provided between the two passages 111 and 121 in each of which the main direction of the movement has been set is provided. The passage 133 is a passage that extends in the X direction and in which the main direction of the movement is not normally set, in other words, is a passage in which each of the wheeled platforms 10 is able to move in both directions of the X direction and the direction opposite to the X direction, and is one example of a third passage. In this case, for example, before the wheeled platform 10 enters the passages 111 and 121, the wheeled platform 10 is able to wait on the passage 133 while temporarily stopping or moving at a low speed enough to stop immediately. Namely, the passage 133 is one example of the waiting portion.

Furthermore, the passage 133 is connected to both of the passage 111 and the passage 121 via the plurality of passages 201 to 207, is located between the passage 111 and the passage 121, and is located in the relatively vicinity of both of the passage 111 and the passage 121. As a result of this, for example, in a case where the number of the wheeled platforms 10 passing through one of the passage 111 and the passage 121 has been increased, the passage 133 is able to be used as an auxiliary passage for the passage 111 or the passage 121 in which the number of the wheeled platforms 10 is increased. Specifically, in a case where the number of the wheeled platforms 10 that move in the X direction in the passage 111 has been increased, it is possible to use the passage 133 as the passage in which each of the wheeled platforms 10 temporarily and mainly moves in the X direction, whereas, in a case where the number of the wheeled platforms 10 moving in the direction opposite to the X direction in the passage 121 has been increased, it is possible to use the passage 133 as the passage in which each of the wheeled platforms 10 temporarily and mainly moves in the direction opposite to the X direction. As a result of this, for example, an effect is provided in that it is possible to suppress each of the wheeled platforms 10 from being retained, and enhance the conveyance efficiency of the article A.

### [Fifth Embodiment]

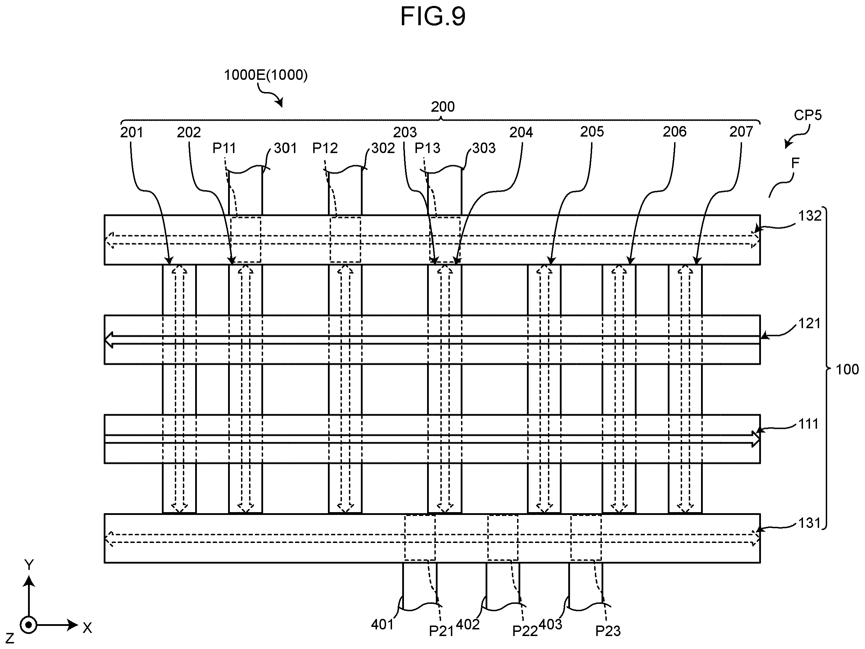

FIG. 9 is a plan view of a conveyance path CP5 that is applied to a conveyance system 1000E (1000) according to a fifth embodiment. In the conveyance paths CP1 to CP4 according to the first to the fourth embodiments described above, each of the wheeled platforms 10 that has a substantially rectangular shape in plan view moves in a posture that is long in the X direction and is short in the Y direction, in contrast, in the present embodiment, each of the wheeled platforms 10 moves in the conveyance path CP5 in a posture that is short in the X direction and is long in the Y direction, in other words, in a posture rotated by 90 degrees relative to the posture of each of the wheeled platforms 10 in the conveyance paths CP1 to CP4 in plan view. As a result of this, for example, an effect is provided in that the conveyance path CP5 is able to be configured to have a shorter length in the X direction as compared with the conveyance paths CP1 to CP4. In other words, a layout of each of the conveyance paths CP1 to CP5 and the posture of each of the wheeled platforms 10 at the time of the movement are able to be selected as appropriate in accordance with the space, a shape, or the like of the floor F in which each of the conveyance paths CP1 to CP5 is installed.

### [Sixth Embodiment]

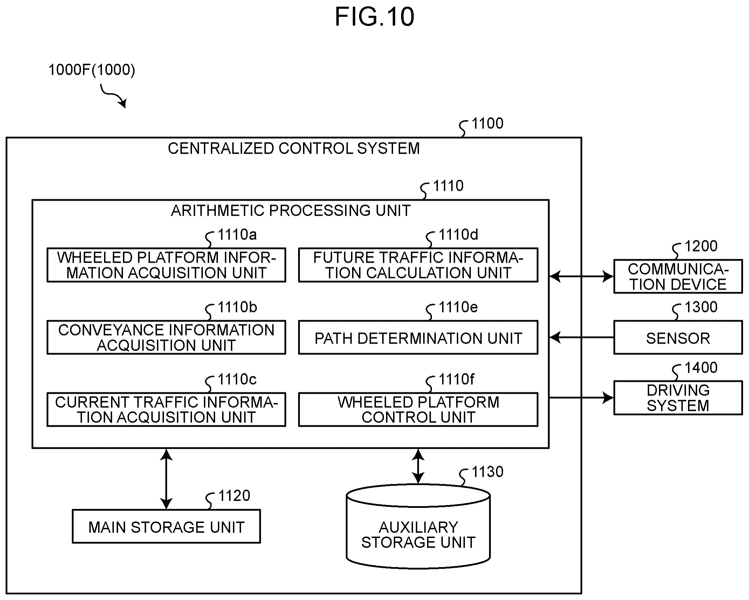

FIG. 10 is a block diagram of the centralized control system 1100 included in a conveyance system 1000F (1000) according to a sixth embodiment. In the present embodiment, the conveyance path CP1 (see FIG. 1) that includes the passages that are arranged in a grid pattern that is the same as that arranged in the first embodiment is provided. However, in the present embodiment, the conveyance system 1000F includes a driving system 1400 that includes a plurality of linear motors. Each of the wheeled platforms 10 moves an operation of the linear motor that is provided in the conveyance path CP1, instead of autonomously moving. The linear motor is arranged in each of the passages 111, 121, 131, 132, and 201 to 207 at a predetermined interval in a direction in which each of the passages 111, 121, 131, 132, and 201 to 207 extends. The centralized control system 1100 changes the position and the movement speed of each of the wheeled platforms 10 by changing a direction of magnetic flux as a result of switching a direction of supplying a current to the plurality of linear motors and by changing the relationship between attraction or repulsion and a magnet provided at each of the wheeled platforms 10. In this case, a sensor 1300 is installed, for example, on the floor F and is, for example, a position sensor that detects a position of each of the wheeled platforms 10 located on the conveyance path CP1, a speed sensor that detects a speed of each of the wheeled platforms 10, an identification sensor that detects an identifier of each of the wheeled platforms 10, or the like. The wheeled platform information acquisition unit 1110a acquires, for example, a position of each of the wheeled platforms 10 and the wheeled platform information that indicates a speed or the like from the sensor 1300. Then, the wheeled platform control unit 1110f calculates, for example, traffic information that has been calculated by the future traffic information calculation unit 1110d and that indicates the traffic at the predetermined timing in the future, that is, control information that is related to each of the linear motors that is used to control the arrangement and the movement speed of each of the wheeled platforms 10 on the basis of the arrangement and the movement speed of each of the wheeled platforms 10, and then controls the subject linear motor.

With also such a configuration, it is possible to construct the same conveyance paths CP1 to CP5 as described above in each of the embodiments, and it is possible to obtain the same effect as that obtained in each of the embodiments. Furthermore, according to the present embodiment, for example, an effect is provided in that it is possible to simplify the configuration of the wheeled platform 10 that is applied to the conveyance system 1000F.

### [Seventh Embodiment]

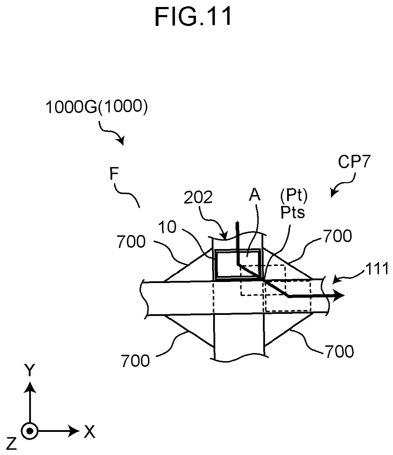

FIG. 11 is a plan view of a part of a conveyance path CP7 that is applied to a conveyance system 1000G (1000) according to a seventh embodiment. In the example illustrated in FIG. 11, a passage 700 in which the wheeled platform 10 that diagonally moves with respect to the X direction and the Y direction is provided at an intersection point of the passage 111 that extends in the X direction and the passage 202 that extends in the Y direction. The passage 700 has a shape obtained by chamfering the corners of the passage 111 and the passage 202. By setting the passage 700 having such a shape, it is possible to allow a section Pts that diagonally moves to be included in a movement path Pt of the wheeled platform 10. As a result of this, for example, an effect is provided in that it is possible to allow the wheeled platform 10 to more smoothly and quickly move between the two passages that intersect each other at the intersection point, or to suppress a rapid acceleration change in the wheeled platform 10, and, in addition, to suppress a shift in position of the article A on the wheeled platform 10. The passage 700 may also be referred to as a shortcut passage.

In the above, the embodiments of the present invention have been exemplified, but each of the above described embodiments is one example, and is not intended to limit the scope of the present invention. The above described embodiments may be implemented in a variety of other forms, and various omissions, substitutions, combinations and changes in the form of the embodiment described herein may be made without departing from the spirit of the invention. Furthermore, the specification, such as each of the configurations and the shapes, (a structure, a type, direction, a model, a size, a length, a width, a thickness, a height, the number of components, an arrangement, a position, the quality of a material, etc.) may be changed as appropriate and implemented.

For example, various changes may be made on the layout or the specifications of the passage included in the conveyance path. For example, the length of the plurality of passages included in the first passage group, the interval of the passages in the second direction, the position of the passages in the first direction, and the like may be changed in various ways, and also, the length of the plurality of passages included in the second passage group, the interval of the passages in the first direction, the position of the passages in the second direction, and the like may also be changed in various ways.

### Reference Signs List

10 wheeled platform
11 control device
11a arithmetic processing unit
11a1 control information acquisition unit
11a2 detection control unit
11a3 travelling control unit
11a4 information output control unit
11b main storage unit
11c auxiliary storage unit
12 communication device
13 sensor
14 driving device
100 first passage group
111 passage (first passage)
121 passage (second passage)
131, 132, 133 passage (third passage, and waiting portion)
200 second passage group
201 to 207 passage (waiting portion)
301 to 303, 401 to 403 conveyor
511, 512, 521, 522 waiting position (waiting portion)
600 passage
700 passage
1000, 1000A to 1000G conveyance system
1100 centralized control system (control unit)
1110 arithmetic processing unit
1110a wheeled platform information acquisition unit
1110b conveyance information acquisition unit
1110c current traffic information acquisition unit
1110d future traffic information calculation unit
1110e path determination unit
1110f wheeled platform control unit
1120 main storage unit
1130 auxiliary storage unit
1200 communication device
1300 sensor
1400 driving system
A article
CP1 to CP5, CP7 conveyance path
F floor
P11 to P13, P21 to P23 transfer position (transfer portion)
Pt, Pt1, Pt2 movement path
Pt1r, Pt2r detour path
Pts section
X direction (first direction)
Y direction (second direction)
Z direction

## Claims

1. A conveyance system comprising:
a first passage group that is constituted of a plurality of passages that are used for a plurality of wheeled platforms, that extend in a first direction, and that are formed in a line shape;
a second passage group that is constituted of a plurality of passages that are used for the plurality of wheeled platforms, that extend in a second direction that intersects with the first direction, and that are formed in the line shape;
a plurality of transfer portions in each of which the wheeled platform stops in order to carry out at least one of loading and unloading; and
a control unit that controls a movement of each of the plurality of wheeled platforms on the first passage group and the second passage group, wherein
at least one of the passages included in the first passage group intersects with at least one of the passages included in the second passage group, and
the control unit controls the movement of each of the plurality of wheeled platforms such that, on a first passage included in the first passage group, the number of wheeled platforms moving in the first direction in a predetermined time period is greater than the number of wheeled platforms moving in a direction opposite to the first direction in the predetermined time period.

2. The conveyance system according to claim 1, wherein the control unit controls the movement of each of the plurality of wheeled platforms such that all of the wheeled platforms passing through the first passage move in the first direction.

3. The conveyance system according to claim 1, wherein the control unit controls the movement of each of the plurality of wheeled platforms such that, on a second passage that is a passage that is included in the first passage group and that is different from the first passage, the number of wheeled platforms moving in the direction opposite to the first direction in the predetermined time period is greater than the number of wheeled platforms moving in the first direction in the predetermined time period.

4. The conveyance system according to claim 3, wherein the control unit controls the movement of the plurality of wheeled platforms such that all of the wheeled platforms passing through the second passage move in the direction opposite to the first direction.

5. The conveyance system according to claim 3, wherein the first passage group includes third passages that are different from the first and the second passages.

6. The conveyance system according to claim 5, wherein
a ratio of the number of wheeled platforms moving along one of the third passages in the first direction in the predetermined time period to the number of all of the wheeled platforms moving along the one of the third passages in the predetermined time period is lower than a ratio of the number of wheeled platforms moving along the first passage in the first direction in the predetermined time period to the number of all of the wheeled platforms moving along the first passage in the predetermined time period, and
a ratio of the number of wheeled platforms moving along another one of the third passages in the direction opposite to the first direction in the predetermined time period to the number of all of the wheeled platforms moving along the another one of the third passages in the predetermined time period is lower than a ratio of the number of wheeled platforms moving along the second passage in the direction opposite to the first direction to the number of all of the wheeled platforms moving along the second passage in the predetermined time period.

7. The conveyance system according to claim 5, wherein
an absolute value of an average speed of all of the wheeled platforms moving along one of the third passages in the predetermined time period is smaller than an absolute value of an average speed of all of the wheeled platforms moving along the first passage in the predetermined time period, and
an absolute value of an average speed of all of the wheeled platforms moving along another one of the third passages in the predetermined time period is smaller than an absolute value of an average speed of all of the wheeled platforms moving along the second passage in the predetermined time period.

8. The conveyance system according to claim 5 or 6, wherein the third passages include the plurality of transfer portions.

9. The conveyance system according to claim 5 or 6, wherein each of the third passages is provided between: the first passage or the second passage; and the plurality of transfer portions.

10. The conveyance system according to claim 1 or 3, wherein at least one of the plurality of transfer portions is provided at a position that is shifted in the second direction or a direction opposite to the second direction with respect to the passage included in the first passage group.

11. The conveyance system according to claim 1 or 3, wherein a waiting portion, in which each of the wheeled platforms waits to move to one of the passage and the transfer portion, is provided.

12. The conveyance system according to claim 11, wherein the waiting portion is provided so as to be adjacent to at least one of the transfer portion and the passage.

13. The conveyance system according to claim 1 or 3, wherein the control unit controls, on the passage included in the second passage group, each of the wheeled platforms such that each of the wheeled platforms waits to move to one of the passage and the plurality of transfer portions.

14. The conveyance system according to claim 1 or 3, wherein the second passage group includes a passage that is disposed alongside with one of the plurality of transfer portions in the second direction.

15. The conveyance system according to claim 1 or 3, wherein the second passage group includes a passage that is shifted in the first direction with respect to one of the plurality of transfer portions.
